# EUROPÄISCHE PATENTSCHRIFT

(11) **EP 1 595 738 B1**
(45) Veröffentlichungstag und Bekanntmachung des Hinweises auf die Patenterteilung: **23.06.2010**
(21) Anmeldenummer: 05010113.8
(22) Anmeldetag: 10.05.2005
(51) Int. Cl.: B60P 7/08, B60R 21/06, F16F 7/12

(54) **Befestigungseinrichtung, insbesondere für eine Sicherheitsnetzanordnung zum Schutz des Fahrgastraumes von Kombi-PKWs**
Connecting device, specially for a security net to protect passangers in a station wagon
Dispositif de connexion, notamment pour un filet de protection dans une voiture

(30) Priorität: 11.05.2004 DE 202004007743 U
(43) Veröffentlichungstag der Anmeldung: 16.11.2005
(73) Patentinhaber: BOS GmbH & Co. KG, 73760 Ostfildern (DE)
(72) Erfinder: Beck, Gernot, 69151 Neckargemünd (DE); Stehle, Pierre, 61191 Rosbach (DE); Kubesch, Winfried, 69151 Neckargemünd (DE)
(74) Vertreter: Rüger, Barthelt & Abel Patentanwälte

(56) Entgegenhaltungen:
- DE-A1- 4 010 209
- DE-A1- 4 241 103
- DE-A1- 19 522 911
- DE-C1- 19 728 587
- DE-C2- 4 336 380
- US-B1- 6 595 567

## Beschreibung

Die Erfindung betrifft eine Befestigungseinrichtung, insbesondere für eine Sicherheitsanordnung zum Schutz des Fahrgastraumes von Kombi- PKWs gegenüber dem Laderaum gemäß dem Oberbegriff des Anspruchs 1.

Aus der DE 40 10 209 AI ist eine Sicherheitsnetzanordnung bekannt, die im Falle eines Frontalaufpralles verhindern soll, dass Gegenstände aus dem Laderaums eines Kombi-PKW in den Fahrgastraum geschleudert werden und zur Verletzung von Insassen führt. Diese bekannte Sicherheitsnetzanordnung umfasst ein Sicherheitsnetz, welches längs einer-Kante an einer Wickelwelle befestigt ist, die in einem an der Rücksichtlehne zu befestigenden Gehäuse drehbar gelagert ist. Die gegenüberliegende Kante der Sicherheitsnetzanordnung ist mit einer Schlaufe versehen, durch die hindurch eine rohrförmige Zugstange geführt ist. Diese Zugstange weist an deren beiden stirnseitigen Enden Halteglieder auf. Diese Halteglieder sind mit ihrem einen Ende in der Zugstange längsverschieblich angeordnet und weisen an dessen anderen Ende einen pilzförmigen Kopf auf, der in die entsprechenden Aufnahmen unterhalb des PKW-Daches eingehängt ist.

Das Halteglied ist im Anschluss an die pilzförmigen Köpfe mit einem zylindrischen Schaft versehen, der in der Zugstange vorgesehen ist. Zwei Gruppen von in die Zugstange eingeprägten Sicken vermindern die lichte Weite der Zugstange auf den Außendurchmesser des zylindrischen Schaftes, so dass auch die Auswärtsbewegung der Halteglieder durch das Anstoßen einer kegelstumpfförmigen Verdickung am Halteglied an die am weitesten inliegende Gruppe von Sicken begrenzt ist. Sollte infolge eines Auffahrunfalles ein Gegenstand aus dem Laderaum gegen das Sicherheitsnetz geschleudert werden, biegt sich die Zugstange durch und bei einer weiter ansteigenden Kraft drücken die kegelförmigen Verdickungen die unmittelbar benachbarte Gruppe der Sicken radial nach außen, wodurch die Aufprallenergie in Verformungsarbeit umgesetzt wird, um das Sicherheitsnetz gegen Reißen zu schützen.

Diese bekannte Lösung weist den Nachteil auf, dass deren Zusammenbau aufwändig ist und dass die Anordnung der kegelförmigen Verdickungen in der Zugstange Klappergeräusche aufgrund des Radialspiels verursachen.

Aus der DE 43 36 380 C2 ist eine gattungsbildende Sicherheitsnetzanordnung bekannt. Diese Sicherheitsnetzanordnung umfasst eine stabförmige Befestigungseinrichtung, die an wenigstens einem ihrer Enden einen länglichen Hohlraum enthält, der von dem betreffenden Ende her in die Befestigungseinrichtung führt und dessen Längsachse zu der Längsachse der Befestigungseinrichtung koaxial ausgebildet ist. In dem Hohlraum erstreckt sich ein rohrförmiges Einsatzstück, welches einen Schaft eines Haltegliedes längsverschieblich aufnimmt. Der Schaft weist ein aus der Befestigungseinrichtung ragendes Ende mit einem Verankerungsglied auf, welches in einer ortsfesten Aufnahmeeinrichtung des PKWs eingesetzt ist. Das gegenüber liegende Ende erstreckt sich durch eine rohrförmigen Deformationskörper, der als Energie verzehrendes Mittel kinematisch zwischen der Befestigungseinrichtung und dem Halteglied angeordnet ist.

Nach einer Ausführungsform ist der Deformationskörper als Metallrohr ausgebildet, um beim Auftreten eines Auffahrunfalles nach dem Biegen der Befestigungseinrichtung die darüber hinaus gehende Aufprallenergie in Verformungsarbeit umzusetzen. Hierbei greifen Fortsätze des Haltegliedes an der Bohrungswand des Metallrohres an und weiten dieses auf.

In einer zweiten Ausführungsform ist der Deformationskörper aus Kunststoff als Spritzteil ausgebildet. Die Umwandlung der Aufprallenergie in Verformungsarbeit erfolgt analog.

Bei der Ausgestaltung eines Metallrohres als Deformationskörper sind Klappergeräusche nicht zu vermeiden. Bei der Ausgestaltung des Deformationskörpers als Kunststoffspritzteil ist nachteilig, dass ein progressiver Kraftanstieg zur erforderlichen Aufnahme der Druckspannung durch ein kegelförmig verjüngtes Einsatzstück nicht hinreichend gegeben ist.

Aufgabe der Erfindung ist es, eine Befestigungseinrichtung, insbesondere für eine Sicherheitsnetzanordnung zum Schutz des Fahrgastraumes von Kombi-PKWs gegenüber dem Laderaum zu schaffen, bei der die Wirkung der Energie verzehrenden Mittel verbessert wird.

Diese Aufgabe wird erfindungsgemäß mit einer Befestigungseinrichtung gemäß den Merkmalen des Anspruchs 1 gelöst.

Durch den Einsatz eines nicht reversiblen, Energie verzehrenden Mittels aus einem geschäumten Material wird ermöglicht, dass mit zunehmender Druckspannung ein Verdichten der Zellwände gegeben ist. Dadurch kann eine hohe Arbeitsenergie aufgenommen und in Verformungsarbeit umgesetzt und abgebaut werden. Die Druckspannung wird mit zunehmendem Arbeitshub erhöht. Der Einsatz eines geschäumten Materiales ist auch in bisherig bestehenden Systemen, insbesondere bei einer Sicherheitsnetzanordnung zum Schutz des Fahrgastraumes von Kombi-PKW gegenüber dem Laderaum, möglich.

Durch das geschäumte Material wird gleichzeitig die Erzeugung von Klappergeräuschen zwischen dem Halteglied und der Zugstange weitgehendst vermieden, so dass insbesondere bei der Verwendung als Befestigungseinrichtung für eine Sicherheitsnetzanordnung die Anforderungen an den Komfort gegeben sind.

Das als nicht reversibles Energie verzehrende geschäumte Material wird bevorzugt aus Metallschäumen oder geschäumten Metalllegierungen hergestellt. Diese Metallschäume weisen eine hohe Energieabsorption auf. Gleichzeitig kann eine gewichtsreduzierte Anordnung für einen Deformationskörper geschaffen werden. Insbesondere werden hierzu Metallschäume aus Leichtmetall oder Leichtmetalllegierungen vorgesehen, um die Vorteile der hohen Energieabsorption und eines geringen Baugewichtes zu erzielen.

Vorteilhafterweise ist das geschäumte Material zumindest aus Aluminium, Silizium, Mangan und/oder Titan und/oder einer Legierung hiervonausgebildet. Beispielsweise eignet sich besonders eine AlSi1Mg0,6-Legierung oder eine ähnliche Legierung. Diese ist nur beispielhaft.

Eine vorteilhafte Ausgestaltung der Erfindung sieht vor, dass die Metallschäume aus einer Gusslegierung hergestellt sind. Die Verwendung derartiger Gusslegierungen weist den Vorteil auf, dass die Schäume sich durch Brechen der Zellwände verformen. Dadurch kann in Abhängigkeit der Ausrichtung und Strukturierung der Zellformen, insbesondere innerhalb des Deformationskörpers, eine gezielte Auslegung zur Druckspannungsaufnahme und somit zur Energieabsorption erzielt werden.

Nach einer alternativen, ebenfalls vorteilhaften Ausgestaltung der Erfindung ist vorgesehen, dass die Metallschäume aus einer Knetlegierung bestehen. Diese Metallschäume weisen den Vorteil auf, dass ein plastisches Verformen der Zellwände gegeben ist. Dadurch kann wiederum in Abhängigkeit der Anwendungsfälle eine geeignete Anpassung für die Energieabsorption im Verhältnis zum vorbestimmten Arbeitshub zum Auffangen der Aufprallenergie gegeben sein.

Die zum Einsatz vorgesehenen geschäumten Materialien weisen zumindest eine Dichte von 0,3 g / cm³ auf. Diese Dichte ist zumindest erforderlich, um eine hinreichende Energieaufnahme sicher zu stellen. Das Verformungsverhalten der geschäumten Materialien ist von der Dichte abhängig. Bei zunehmender Schaumdichte erhöht sich die Druckfestigkeit, wodurch wiederum das Energieaufnahmevermögen erhöht wird. Dadurch kann eine weitere Anpassung an die im Falle eines Aufpralls abzubauende Aufprallenergie ermöglicht sein.

Die geschäumten Materialien, insbesondere die Metallschäume oder Schäume aus Metalllegierungen, können zumindest offenporig oder geschlossenporig ausgebildet sein. Die offenporige Ausgestaltung der Schäume weist in besonderen Einsatzfällen den Vorteil auf, dass ein in der Befestigungseinrichtung vorgesehenes Medium das geschäumte Material durchströmen kann, ohne die Funktion der Energieabsorption zu beeinträchtigen. Die geschlossenporige Ausgestaltung des geschäumten Materials weist den Vorteil auf, dass ein höherer Elastizitätsmodul zu erzielen ist und auch erhöhte Druckfestigkeiten beziehungsweise Zugfestigkeit eingestellt werden kann.

Vorteilhafterweise ist vorgesehen, dass das Energie verzehrende Mittel als hülsenförmiger Deformationskörper ausgebildet ist. Dadurch wird die Herstellung einer Befestigungseinrichtung vereinfacht. Der Deformationskörper kann separat hergestellt werden und in einfacher Weise in die Befestigungseinrichtung eingesetzt werden. Die hülsenförmige Ausgestaltung des Deformationskörpers weist den Vorteil auf, dass darin ein Halteglied, insbesondere ein zylindrischer Abschnitt des Halteglieds, geführt ist und gleichzeitig eine einfache Einbringung der Aufprallenergie in den Deformationskörper gegeben ist.

Nach einer alternativen Ausführungsform der Erfindung ist vorgesehen, dass das Energie verzehrende Mittel als zylinderförmiger Deformationskörper ausgebildet ist. Bei dieser Ausführungsform ist vorteilhafterweise das Halteglied hülsenförmig ausgebildet und nimmt den zylinderförmigen Deformationskörper auf. Dadurch ist ebenfalls eine einfache Montage gegeben und die Funktion sichergestellt.

Der hülsenförmige oder zylinderförmige Deformationskörper können einzeln oder mehrfach hintereinander und/oder in Kombination nebeneinander vorgesehen sein, um einen Arbeitshub zwischen dem Halteglied und der Befestigungseinrichtung durch Umwandlung der eingeleiteten Energie in Verformungsarbeit abzubauen.

Nach einer alternativen Ausführungsform des Deformationskörpers ist vorgesehen, dass ein geschäumtes Material vorgesehen ist, das sich mit zunehmender Streckung oder Dehnung verfestigt. Hierbei können die zuvor beschriebenen Schäume eingesetzt werden oder weitere Schäume, deren Zellstruktur oder Porenanordnung derart ausgerichtet ist, dass diese sich mit zunehmender Dehnung festigen und eine vorbestimmte Last aufnehmen. Das Halteglied kann einteilig oder mehrteilig aus mehreren Materialkomponenten hergestellt sein, so dass wahlweise verschiedene Deformationskörper an dem Halteglied anbringbar sind.

Die zu den vorgenannten Ausführungsbeispielen erwähnten Vorteile und Ausgestaltungsmöglichkeiten können auch für das alternative Halteglied vorgesehen sein, dessen zylindrischer Abschnitt, der vorzugsweise in dem Gehäuse der Zugstange vorgesehen ist, zumindest als ein Teil eines Deformationskörpers ausgebildet ist.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: Eine perspektivische Darstellung einer zwischen einem Dach eines Kraftfahrzeuges und einer Rü- ckenlehne aufgespannten Sicherheitsnetzes,
- Figur 2: eine schematische Schnittdarstellung einer erfin- dungsgemäßen Befestigungseinrichtung in einem unbelasteten Zustand und
- Figur 3: eine schematische Schnittdarstellung der erfin- dungsgemäßen Befestigungseinrichtung nach einer Deformation.

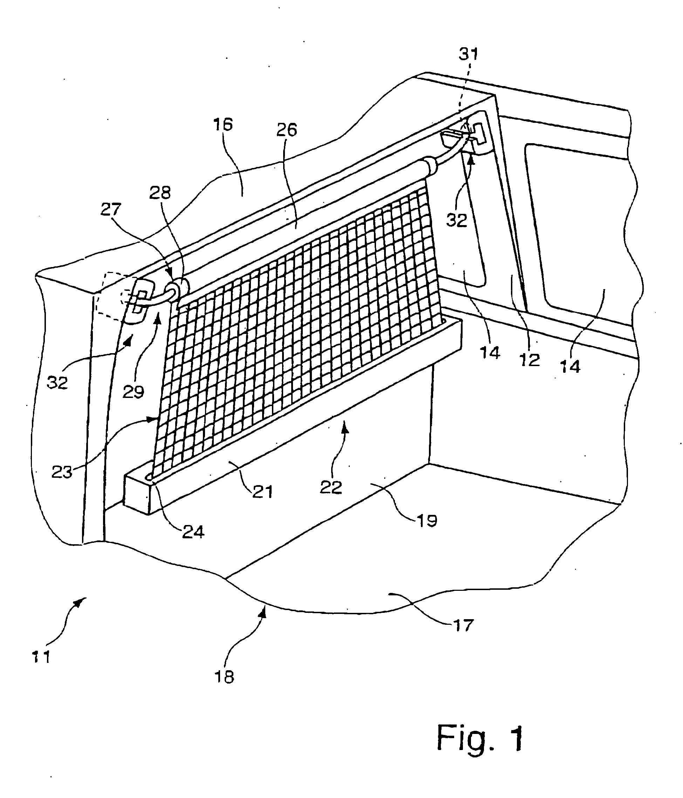

In Figur 1 ist ein Ausschnitt eines Heckbereiches 11 eines Kombi-PKWs dargestellt. Der Heckbereich 11 ist seitlich durch eine C-Säule 12 begrenzt, an welche sich Fenster 14 anschließen. Im oberen Bereich der C-Säule 12 schließt sich ein Dach 16 an. Im unteren Bereich der C-Säule 12 ist eine Ladefläche 17 vorgesehen. Ein Laderaum 18 ist durch das Dach 16, die Ladefläche 17 sowie den C-Säulen 12 und einer Rücksitzbank 19 begrenzt. An einer Rückseite der Rücksitzbank 19 ist ein Gehäuse 21 einer Sicherheitsnetzanordnung 22 angebracht. In diesem Gehäuse 21 ist in bekannter Weise eine Wickelwelle drehbar gelagert, an der mit einer Längskante ein Sicherheitsnetz 23 befestigt ist, das durch einen Schlitz 24 in dem Gehäuse 21 wahlweise herausziehbar beziehungsweise in das Gehäuse 21 einzufahren ist. Beim Einfahren des Sicherheitsnetzes 23 in das Gehäuse 21 ist vorgesehen, dass die Wickelwelle mit Hilfe eines Federmotors in Aufwickelrichtung vorgespannt ist. Das Sicherheitsnetz 23 weist eine parallel zur Wickelwelle laufenden Vorderkante 26 auf, welche beispielsweise über eine Schlaufe zur Befestigungseinrichtung 27 angeordnet ist. Die Befestigungseinrichtung 27 umfasst eine Zugstange 28 sowie jeweils zu deren Enden beidseitig angeordnete Halteglieder 29. Die Halteglieder 29 weisen an ihren freien Enden pilzförmig Köpfe 31 auf, die in Aufnahmen 32 einsetzbar sind. Die Aufnahmen 32 sind ortsfest im Übergangsbereich zwischen der C-Säule 12 und dem Dach 16 angeordnet. In der in Figur 1 dargestellten ausgefahrenen Position des Sicherheitsnetzes 23 ist der Laderaum 18 durch das Sicherheitsnetz 23 zum Innenraum der Insassen getrennt.

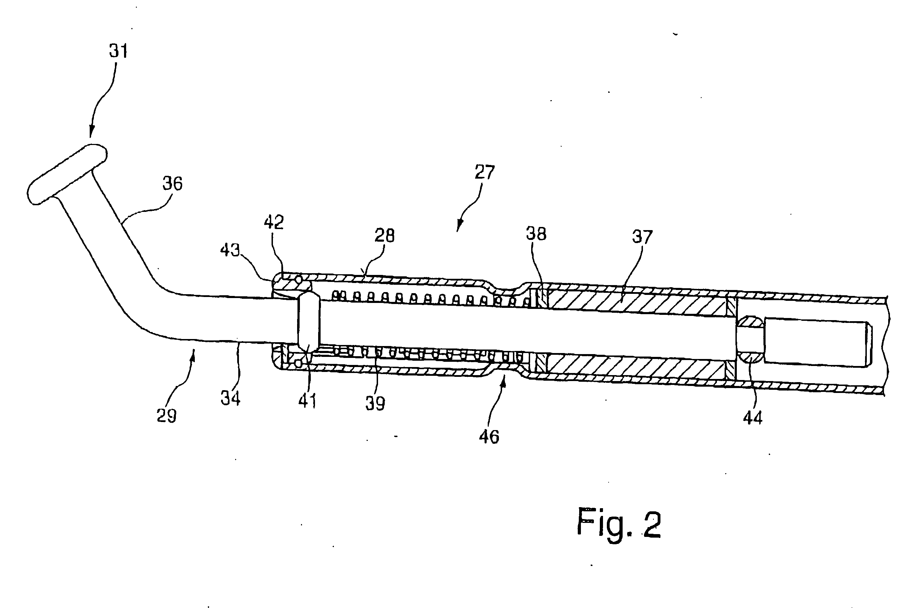

In Figur 2 ist eine schematische Schnittdarstellung einer erfindungsgemäßen Befestigungseinrichtung 27 dargestellt. Diese umfasst eine Zugstange 28, welche als dünnwandiges, zylindrisches Rohr ausgebildet ist. Die Zugstange 28 weist einen Hohlraum auf, in dem das Halteglied 29 mit einem zylindrischen Abschnitt 34 längsverschieblich eingesetzt ist. Außerhalb der Zugstange 28 ist der pilzförmige Kopf 31 an einem abgewinkelten zylindrischen Abschnitt 36 vorgesehen.

Der zylindrische Abschnitt 34 des Haltegliedes 29 durchquert einen Deformationskörper 37, der im Hohlraum der Zugstange 28 einsetzbar ist. Auf dem zylindrischen Abschnitt 34 des Haltegliedes 19 ist ein ringförmiges Scheibenelement 38 befestigt, an welchem sich von der einen Seite her der Deformationskörper 37 abstützt. Auf der gegenüber liegenden Seite ist ein Federglied 39 vorgesehen. Ein Einsatzstück 43 ist vom freien Ende der Zugstange 28 in den Bund 42 eingesetzt und fixiert.

Die Montage der Befestigungseinrichtung 27 folgt beispielsweise wie folgt: Auf den zylindrischen Abschnitt 34 wird von einem dem pilzförmigen Kopf 31 gegenüber liegenden Ende das Einsatzstück 43 aufgesetzt. Dieses Einsatzstück 43 weist zwei im Winkel zueinander beabstandete Vertiefungen auf, so dass in einer Position das Einsatzstück 43 über Fortsätze 41 des Halteglieds 29 hinweggeführt und nach Verdrehen des Einsatzstückes 43 zum Halteglied 29 eine Anlagefläche für die Fortsätze 41 an dem Einsatzstück 43 bilden. Im Anschluss daran wird ein Federglied 39 auf den zylindrischen Abschnitt 34 aufgesetzt. An einer vorbestimmten Position wird das Scheibenelement 38 zum zylindrischen Abschnitt 34 des Haltegliedes 29 provisorisch fixiert, beispielsweise durch eine Klebe-, Schweiß- oder Pressverbindung. Im Anschluss daran wird der Deformationskörper 37 auf dem zylindrischen Abschnitt 34 positioniert und die Fortsätze 44 eingebracht, um den Deformationskörper 37 zum zylindrischen Abschnitt 34 zu fixieren. Diese Montagebaugruppe wird in die Zugstange 28 eingesetzt bis das Einsatzstück 43 am Bund 42 anliegt. Im Anschluss daran wird die Sicke 46 eingebracht. Durch das Einbringen der Sicke 46 wird über das ringförmige Scheibenelement 38 der Deformationskörper 37 in einer definierten Lage zur Zugstange 28 positioniert.

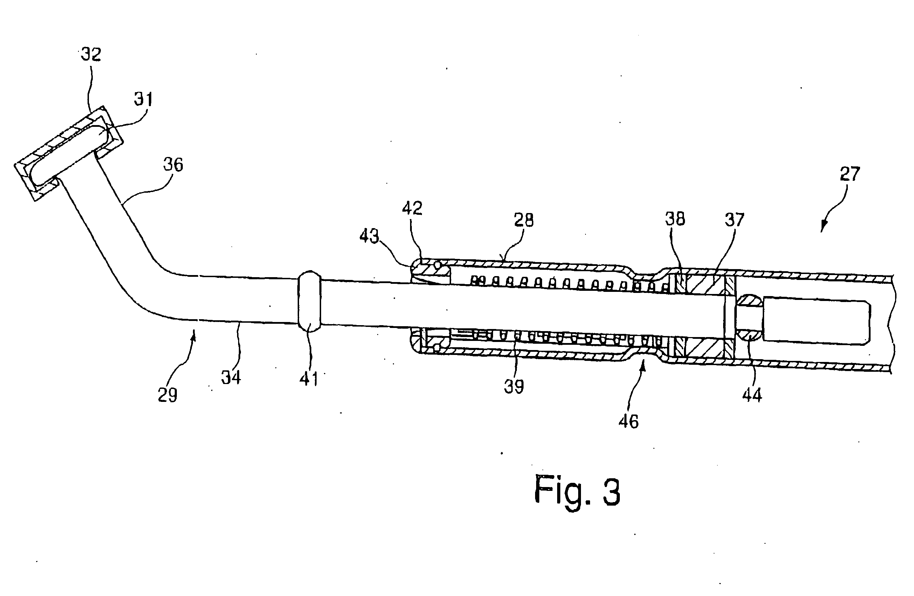

In Figur 3 ist die erfindungsgemäße Befestigungseinrichtung 27 nach einem Einsatzfall zur Absorption der Aufprallenergie eines Gegenstandes im Sicherheitsnetz 23 dargestellt.

Bei Frontalaufprall eines Fahrzeuges wird beispielsweise ein Gegenstand gegen das Sicherheitsnetz 23 geschleudert. Das Halteglied 29, welches mit seinem pilzförmigen Kopf 31 in der Aufnahme 32 verankert ist, wird durch eine Biegung oder Auslenkung der Zugstange 28 aus dem Hohlraum der Zugstange 28 heraus bewegt. Dabei wird ein Teil der kinetischen Energie in Verformungsarbeit umgesetzt, indem sich beispielsweise die Zugstange 28 zumindest teilweise verbiegt. Falls sich durch das Verbiegen der Zugstange 28 noch nicht die gesamte kinetische Energie aufgebraucht ist, arbeiten die Fortsätze 44 gegen den Deformationskörper 37 zum weiteren Abbau der Aufprallenergie und verringern das Volumen. Das sich an der Sicke 46 abstützende Scheibenelement 38 bildet das Widerlager für den Deformationskörper 37.

Der Deformationskörper 37 ist gemäß einer ersten erfindungsgemäßen Ausführungsform aus einem geschäumten Material, insbesondere aus einem Metallschaum, ausgebildet. In einer ersten Phase der Energieabsorption arbeitet der Deformationskörper 37 in einem linearelastischen Bereich. Die Zellwände werden durch eine elastische Biegung im Hook'schen Bereich beansprucht. Im Anschluss daran findet ein Übergang in einen elastisch/plastischen Bereich statt. Sofern als Schaum eine Knetlegierung vorgesehen ist, wird im Anschluss an den elastisch/plastischen Bereich eine plastische Verformung eintreten, in dem die Zellwände aufeinander gepresst werden. Beim Einsatz von Gusslegierungen erfolgt ein Brechen der Zellwände, wobei die Zellwandsegmente ebenfalls aufeinander gepresst werden.

Der Deformationskörper 37 ist sehr flexibel in der Anpassung an den Bauraum und die aufzubringende Energie. Beispielsweise kann der Deformationskörper 37 gemäß der Figur 2 hülsenförmig ausgebildet sein und als vorgefertigtes Bauteil zur Montage bereitgestellt werden. Alternativ kann vorgesehen sein, dass der hülsenförmige Deformationskörper 37 unmittelbar auf den zylindrischen Abschnitt 34 des Haltegliedes 29 aufgebracht ist, wobei vor dem Aufbringen oder Anbringen des Deformationskörpers 37 bereits eine Teilmontage des Einsatzstückes 43 und des Federgliedes 39 vorteilhafterweise erfolgt ist.

Die Länge und das Volumen des Energie verzehrenden Mittels bilden Parameter zur Energieabsorption. Des weiteren ist die Auswahl des Materials der Schäume sowie die Art der Poren für die Größe der Energieabsorption maßgeblich. Beispielsweise kann ein teilweise offenporiger Schaum vorgesehen sein, der aus einer Legierung AlSiC besteht. Dieser Schaum weist beispielsweise einen E-Modul von 0,4 bis 1,0 GPa bei einer Dichte von 0,1 bis 0,25 g/cm³ auf. Dadurch lassen sich Zug- und Druckfestigkeit bis beispielsweise 2 MPa erzielen. Alternativ kann ein geschlossenporiger Schaum aus Aluminium oder eine Aluminiumlegierung vorgesehen sein. Dieser weist beispielsweise einen E-Modul von bis zu 14 Gpa und eine absolute Dichte bis 1,0 g/cm³ auf. Dadurch kann eine Druckund Zugfestigkeit von wenigstens 2 MPa erzielt werden.

Der Deformationskörper 37 kann beispielsweise an einer zum zylindrischen Abschnitt 34 weisenden Innenwand eine Beschichtung aus Kunststoff oder eine Gummierung zur Dämpfung und Lagerung aufweisen. Dabei wird das Halteglied 29 in der Zugstange 28 zumindest geräuscharm/ vorzugsweise geräuschfrei gelagert und längsverschieblich geführt.

## Patentansprüche

1. Befestigungseinrichtung, insbesondere für eine Sicherheitsnetzanordnung (22) zum Schutz eines Fahrgastraumes von Kombi-PKWs gegenüber einem Laderaum (18),
mit einer Zugstange (28), die an wenigstens einem ihrer Enden einen länglichen Hohlraum enthält, der von dem betreffenden Ende her in die Zugstange (28) führt und dessen Längsachse zur Längsachse der Befestigungseinrichtung (27) koaxial ist,
mit einem in dem Hohlraum steckenden rohrförmigen Einsatzstück (43), das in dem Hohlraum befestigt ist,
mit einem einen zylindrischen Abschnitt (34) aufweisenden Halteglied (29), das mit seinem zylindrischen Abschnitt (34) längsverschieblich in dem Innenraum des Einsatzstücks (43) steckt, wobei das aus der Zugstange (28) ragende Ende des zylindrischen Abschnittes (34) ein Verankerungsglied (31) aufweist, das in eine ortsfeste Aufnahme (32) einzusetzen ist,
mit einem Federglied (39), durch das das Halteglied (29) bezüglich dem Einsatzstück (43) in einer Endlage gehalten ist, und
mit einem Energie verzehrenden Mittel aufweisenden Deformationskörper (37) zwischen der Zugstange (28) und dem Halteglied (29), **dadurch gekennzeichnet,**
**dass** für den Deformationskörper (37) ein nicht reversibles Energie verzehrendes Mittel aus einem geschäumten Material vorgesehen ist.

2. Befestigungseinrichtung nach Anspruch 1, **dadurch gekennzeichnet, dass** als geschäumtes Material ein Metall oder eine Metalllegierung, insbesondere Legierung aus Nichtmetall, vorgesehen ist.

3. Befestigungseinrichtung nach Anspruch 2, **dadurch gekennzeichnet, dass** die Legierung des geschäumten Materials zumindest einen Bestandteil Al, Si, C, Mg oder Ti aufweist.

4. Befestigungseinrichtung nach Anspruch 2 oder 3, **dadurch gekennzeichnet, dass** das geschäumte metallische Material aus einer Gusslegierung besteht.

5. Befestigungseinrichtung nach Anspruch 2 oder 3, **dadurch gekennzeichnet, dass** das geschäumte metallische Material aus einer Knetlegierung besteht.

6. Befestigungseinrichtung nach einem der vorhergehenden Ansprüche, **dadurch gekennzeichnet, dass** das geschäumte Material eine Dichte von zumindest 0,3 g/cm³ aufweist.

7. Befestigungseinrichtung nach einem der vorhergehenden Ansprüche, **dadurch gekennzeichnet, dass** das geschäumte Material zumindest offen- oder geschlossenporig ausgebildet ist.

8. Befestigungseinrichtung nach einem der vorhergehenden Ansprüche, **dadurch gekennzeichnet, dass** das Energie verzehrende Mittel als hülsenförmiger Deformationskörper (37) ausgebildet ist.

9. Befestigungseinrichtung nach Anspruch 8, **dadurch gekennzeichnet, dass** ein zylindrischer Abschnitt (34) des Haltegliedes (29) den hülsenförmigen Deformationskörper (37) durchquert.

10. Befestigungseinrichtung nach einem der Ansprüche 1 bis 7, **dadurch gekennzeichnet, dass** das Energie verzehrende Mittel als blockförmiger Deformationskörper (37) ausgebildet ist.

11. Befestigungseinrichtung nach Anspruch 10, **dadurch gekennzeichnet, dass** das Halteglied (39) einen zylindrischen Abschnitt (34) mit einem hülsenförmigen Bereich aufweist, in den ein blockförmiger Deformationskörper (37) einsetzbar ist, wobei die an dem blockförmigen Deformationskörper (37) angeordneten Haltemittel an zumindest einer Sicke (46) der Zugstange (28) angreifen.

## Claims

1. Fastening means, in particular for a safety net arrangement (22) for protecting a passenger compartment of an estate car from a cargo area (18),
with a pull rod (28), which on at least one of its ends contains an elongated cavity, which leads from the respective end into the pull rod (28) and the longitudinal axis of which is coaxial to the longitudinal axis of the fastening means (27),
with a tubular insert piece (43), which projects in the cavity and is fastened in the cavity,
with a holding member (29), which has a cylindrical section (34) and projects in the interior of the insert piece (43) with its cylindrical section (34) to be longitudinally displaceable, wherein the end of the cylindrical section (34) projecting out of the pull rod (28) has an anchoring member (31), which is to be inserted into a fixed receiving means (32),
with a spring member (39), by means of which the holding member (29) is held in an end position relative to the insert piece (43), and
with a deformation body (37) having energy-dissipating elements between the pull rod (28) and the holding member (29), **characterised in that**
a non-reversible energy-dissipating element made of foamed material is provided for the deformation body (37).

2. Fastening means according to claim 1, **characterised in that** a metal or a metal alloy, in particular a non-metal alloy, is provided as foamed material.

3. Fastening means according to claim 2, **characterised in that** the alloy of the foamed material has at least one Al, Si, C, Mg or Ti component.

4. Fastening means according to claim 2 or 3, **characterised in that** the foamed metallic material is composed of a casting alloy.

5. Fastening means according to claim 2 or 3, **characterised in that** the foamed metallic material is composed of a wrought alloy.

6. Fastening means according to one of the preceding claims, **characterised in that** the foamed material has a density of at least 0.3 g/cm³.

7. Fastening means according to one of the preceding claims, **characterised in that** the foamed material is at least open- or closed-pored.

8. Fastening means according to one of the preceding claims, **characterised in that** the energy-dissipating element is configured as a sleeve-like deformation body (37).

9. Fastening means according to claim 8, **characterised in that** a cylindrical section (34) of the holding member (29) passes through the sleeve-like deformation body (37).

10. Fastening means according to one claims 1 to 7, **characterised in that** the energy-dissipating element is configured as a block-like deformation body (37).

11. Fastening means according to claim 10, **characterised in that** the holding member (39) has a cylindrical section (34) with a sleeve-like region, into which a block-like deformation body (37) can be inserted, wherein the holding means arranged on the block-like deformation body (37) act on at least one bead (46) of the pull rod (28).

## Revendications

1. Dispositif de fixation, notamment pour un système de filet de sécurité (22) destiné à protéger l'habitacle d'un break par rapport à l'espace de chargement, (18) qui comporte :
- une tige de traction (28) présentant à au moins une de ses extrémités un volume creux allongé qui part de cette extrémité en pénétrant dans la tige (28) et dont l'axe longitudinal est coaxial à celui du dispositif de fixation (27),
- un insert (43) tubulaire enfoncé dans le volume creux et fixé à celui-ci,
- un organe de maintien (29) présentant une partie cylindrique (34) par laquelle il est enfoncé en pouvant coulisser, dans l'espace interne de l'insert (43), l'extrémité de la partie cylindrique (34) qui sort de la tige de traction (24) présentant un organe d'ancrage (31) à insérer dans un logement (32) fixe,
- un organe élastique (39) qui maintient l'organe de maintien (29) dans une position extrême par rapport à l'insert (43),
- un corps de déformation (37) qui présente un moyen consommant de l'énergie et qui est disposé entre la tige de traction (28) et l'organe de maintien (29),
ce dispositif de fixation étant **caractérisé en ce que** pour le corps de déformation (37) il est prévu un moyen non réversible de consommation d'énergie, constitué d'un matériau cellulaire.

2. Dispositif de fixation selon la revendication 1, **caractérisé en ce qu'**il est prévu, en tant que matériau cellulaire, un métal ou un alliage métallique, notamment un alliage non métallique.

3. Dispositif de fixation selon la revendication 2, **caractérisé en ce que** l'alliage en matériau cellulaire comprend au moins un composant Al, Si, C, Mg ou Ti.

4. Dispositif de fixation selon la revendication 2 ou 3, **caractérisé en ce que** le matériau métallique cellulaire est constitué par un alliage coulé.

5. Dispositif de fixation selon la revendication 2 ou 3, **caractérisé en ce que** le matériau métallique cellulaire est constitué par un alliage corroyé.

6. Dispositif de fixation selon une des revendications précédentes, **caractérisé en ce que** le matériau cellulaire présente une densité d'au moins 0,3 g/cm³.

7. Dispositif de fixation selon une des revendications précédentes, **caractérisé en ce que** le matériau cellulaire présente au moins des pores ouverts ou fermés.

8. Dispositif de fixation selon une des revendications précédentes, **caractérisé en ce que** le moyen consommant de l'énergie est constitué par un corps de déformation (37) en forme de douille.

9. Dispositif de fixation selon la revendication 8, **caractérisé en ce qu'**une partie cylindrique (34) de l'organe de maintien (29) traverse le corps de déformation (37) en forme de douille.

10. Dispositif de fixation selon une des revendications précédentes, **caractérisé en ce que** le moyen consommant de l'énergie est constitué par un corps de déformation (37) en forme de bloc.

11. Dispositif de fixation selon la revendication 10, **caractérisé en ce que** l'organe de maintien (29) présente une partie cylindrique (34) avec une zone en forme de douille dans laquelle peut être inséré un corps de déformation (37) en forme de bloc, les moyens de maintien disposés sur ce corps (37) étant en prise avec au moins un collet (46) de la tige de traction (28).
